(19) Europäisches Patentamt
European Patent Office
Office européen des brevets

(11) **EP 3 590 682 B1**

(12) **EUROPEAN PATENT SPECIFICATION**

(45) Date of publication and mention
of the grant of the patent:
**28.04.2021 Bulletin 2021/17**

(51) Int Cl.:
***B29C 45/76*** *(2006.01)*      ***B22D 17/26*** *(2006.01)*
***B29C 45/66*** *(2006.01)*

(21) Application number: **18761443.3**

(86) International application number:
**PCT/JP2018/007191**

(22) Date of filing: **27.02.2018**

(87) International publication number:
**WO 2018/159592 (07.09.2018 Gazette 2018/36)**

(54) **INJECTION MOLDING MACHINE AND INJECTION MOLDING METHOD**

SPRITZGIESSMASCHINE UND SPRITZGIESSVERFAHREN

MACHINE DE MOULAGE PAR INJECTION ET PROCÉDÉ DE MOULAGE PAR INJECTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.02.2017 JP 2017037773**

(43) Date of publication of application:
**08.01.2020 Bulletin 2020/02**

(73) Proprietor: **Sumitomo Heavy Industries, Ltd.
Tokyo 141-6025 (JP)**

(72) Inventor: **SAKAI, Kiminori
Chiba-shi
Chiba 263-0001 (JP)**

(74) Representative: **Louis Pöhlau Lohrentz
Patentanwälte
Postfach 30 55
90014 Nürnberg (DE)**

(56) References cited:
**JP-A- H08 290 437      JP-A- 2001 239 562
JP-A- 2001 239 563      JP-A- 2006 334 944
JP-A- 2016 185 690      JP-A- 2016 185 690
US-A- 4 345 890**

**Description**

Technical Field

The present invention relates to an injection molding machine and an injection molding method.

Background Art

An injection molding machine described in PTL 1 includes a double toggle mechanism including a pair of link groups including a first link and a second link which are bendably/stretchably connected to each other, and a plurality of tie bars which extend according to a mold clamping force generated by operating the double toggle mechanism. The mold clamping force is applied to the plurality of tie bars in a distributed manner, and each of the tie bars extends. The force that resists the extension of each of the tie bars is called an axial force. By adjusting an effective length of each of the tie bars, a balance of axial force can be adjusted. For example, the balance of axial force is set such that a surface pressure between a stationary mold and the movable mold becomes a target distribution during mold clamping.

Citation List

Patent Literature

[PTL 1] Japanese Unexamined Patent Publication No. 2016-185690

Summary of Invention

Technical Problem

A mold clamping unit repeatedly performs mold closing, mold clamping, and mold opening of a mold unit. Therefore, the double toggle mechanism may be deteriorated and a symmetry of the double toggle mechanism may be broken. If the symmetry of the double toggle mechanism is broken, problems in quality of molding products and durability of the machine may be incurred.
In a case where the symmetry of the double toggle mechanism is broken, it is possible to adjust the balance of the tie bars such that the surface pressure between the stationary mold and the movable mold becomes the target distribution. However, the problem in the durability of the machine is unavoidably incurred.
In the related art, in order to accurately evaluate the symmetry of the double toggle mechanism, a dedicated sensor such as a laser displacement meter is required, and it has been difficult to easily and accurately evaluate the symmetry of the double toggle mechanism.
The present invention has been made in view of the above problems, and a main object thereof is to provide an injection molding machine capable of easily and accurately evaluating a symmetry of a double toggle mechanism.

Solution to Problem

In order to solve the above problems, according to an aspect of the present invention, there is provided an injection molding machine including: a double toggle mechanism including a pair of link groups including a first link and a second link which are bendably/stretchably connected to each other; a plurality of tie bars which extend in mold opening and closing directions according to a mold clamping force generated by operating the double toggle mechanism; and a tie bar balance measurer which measures a balance of the plurality of tie bars, in which the tie bar balance measurer includes a tie bar strain measurement unit which measures strains of the plurality of tie bars generated by mold clamping, a balance measurement unit which measures the balance of the plurality of tie bars based on a measurement result of the tie bar strain measurement unit, a balance change measurement unit which measures a change in the balance measured by the balance measurement unit when the mold clamping force is changed, and a toggle symmetry evaluation unit which evaluates a symmetry of the double toggle mechanism based on a measurement result of the balance change measurement unit.

Advantageous Effects of Invention

According to the aspect of the present invention, the injection molding machine capable of easily and accurately evaluating the symmetry of the double toggle mechanism is provided.

Brief Description of Drawings

Fig. 1 is a view showing a state when mold opening of an injection molding machine according to an embodiment is completed.

Fig. 2 is a view showing a state at the time of mold clamping of the injection molding machine according to the embodiment.

Fig. 3 is a view showing a positional relationship between a plurality of tie bars provided in the injection molding machine according to the embodiment, and is a view of a stationary platen as viewed from a movable platen side.

Fig. 4 is a functional block diagram showing components of a controller according to the embodiment.

Fig. 5 is a diagram showing three measurement results of a balance change measurement unit according to the embodiment.

Figs. 6A and 6B are views showing a magnitude relationship between two link angles during mold clamping according to the embodiment.

Description of Embodiments

Hereinafter, embodiments of the present invention will be described with reference to the drawings. In each of the drawings, the same or corresponding components are denoted by the same or corresponding reference numerals, and description thereof is omitted.

(Injection Molding Machine)

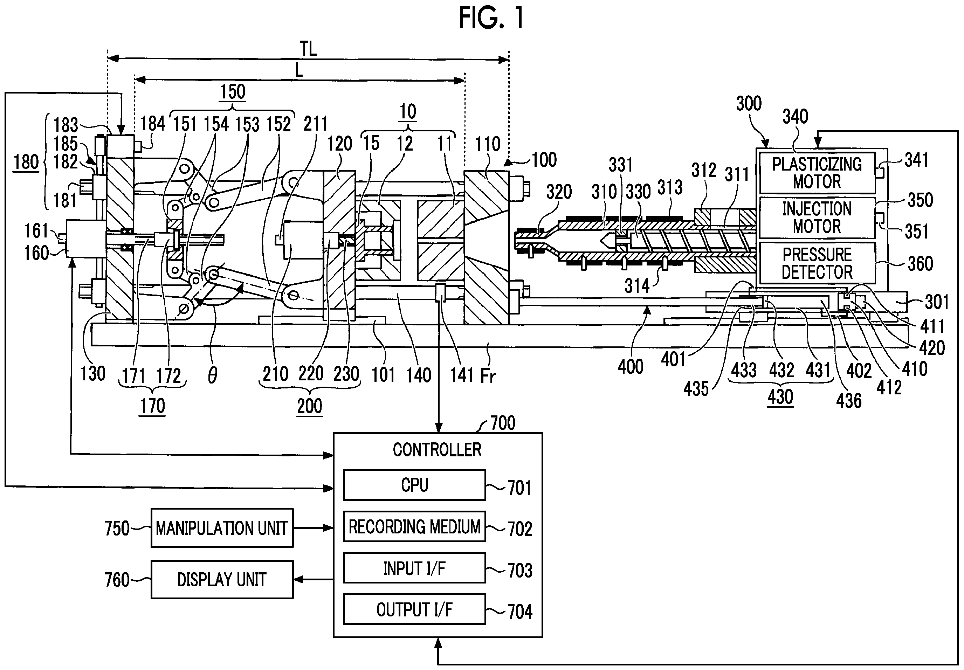

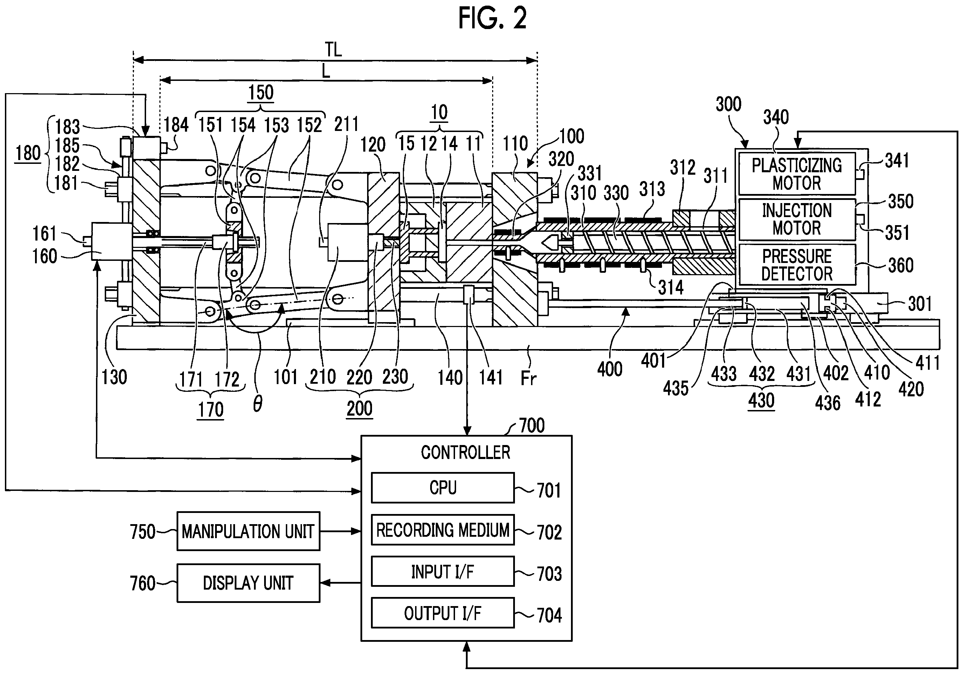

Fig. 1 is a view showing a state when mold opening of an injection molding machine according to an embodiment is completed. Fig. 2 is a view showing a state at the time of mold clamping of the injection molding machine according to the embodiment. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of the injection molding machine. As shown in Figs. 1 and 2, the injection molding machine includes a mold clamping unit 100, an ejector unit 200, an injection unit 300, a movement unit 400, a controller 700, and a frame Fr. Hereinafter, each component of the injection molding machine will be described.

(Mold Clamping Unit)

In descriptions of the mold clamping unit 100, a movement direction (for example, a right direction in Figs. 1 and 2) of a movable platen 120 when a mold is closed is defined as a front side, and a movement direction (a left direction in Figs. 1 and 2) of the movable platen 120 when the mold is opened is defined as a rear side.

The mold clamping unit 100 performs mold closing, mold clamping, and mold opening of a mold unit 10. For example, the mold clamping unit 100 is a horizontal type mold clamping unit, and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame Fr. A stationary mold 11 is attached to a surface of the stationary platen 110 facing the movable platen 120.

The movable platen 120 is movable in the mold opening and closing directions with respect to the frame Fr. A guide 101 which guides the movable platen 120 is placed on the frame Fr. A movable mold 12 is attached to a surface of the movable platen 120 facing the stationary platen 110.

The movable platen 120 moves forward or rearward with respect to the stationary platen 110, and thus, mold closing, mold clamping, and mold opening are performed. The mold unit 10 is constituted by the stationary mold 11 and the movable mold 12.

The toggle support 130 is connected to the stationary platen 110 with a gap therebetween, and is placed on the frame Fr to be movable in the mold opening and closing directions. In addition, the toggle support 130 may be movable along a guide which is placed on the frame Fr. The guide of the toggle support 130 may be also used as the guide 101 of the movable platen 120.

In addition, in the present embodiment, the stationary platen 110 is fixed to the frame Fr, and the toggle support 130 is movable in the mold opening and closing directions with respect to the frame Fr. However, the toggle support 130 may be fixed to the frame Fr, and the stationary platen 110 may be movable in the mold opening and closing directions with respect to the frame Fr.

The stationary platen 110 and the toggle support 130 are connected to each other with a gap L in the mold opening and closing directions by the tie bar 140. A plurality of (for example, four) tie bars 140 may be used. Each of the tie bars 140 is parallel to the mold opening and closing directions and extends according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, an oil hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/stretchably connected to each other by pins or the like . The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing step, a mold clamping step, a mold opening step, or the like under a control of the controller 700.

In the mold closing step, the mold clamping motor 160 is driven to move the crosshead 151 forward to a mold closing completion position at a set speed. Accordingly, the movable platen 120 moves forward and the movable mold 12 comes into contact with the stationary mold 11. For example, a position or speed of the crosshead 151 is detected using a mold clamping motor encoder 161 or the like. The mold clamping motor encoder 161 detects the rotation of the mold clamping motor 160 and sends a signal indicating the detection result to the controller 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping step, the mold clamping motor 160 is further driven to further move the crosshead 151 forward from the mold closing completion position to a mold clamping position, and thus, a mold clamping force is generated. When the mold is clamped, a cavity space 14 (see Fig. 2) is formed between the movable mold 12 and the stationary mold 11, and the cavity space 14 is filled with a liquid molding material by the injection unit 300. A filled molding material is solidified, and thus, a molding product can be obtained. A plurality of cavity spaces 14 may be provided, and in this case, a plurality of molding products are obtained simultaneously.

In the mold opening step, the mold clamping motor 160 is driven to move the crosshead 151 rearward to a mold opening completion position at a set speed. Accordingly, the movable platen 120 moves rearward, and the movable mold 12 is separated from the stationary mold 11. Thereafter, the ejector unit 200 ejects the molding product from the movable mold 12.

Setting conditions in the mold closing step and the mold clamping step are collectively set as a series of setting conditions. For example, the speed or positions (including mold closing start position, speed switching position, mold closing completion position, and mold clamping position) and the mold clamping force of the crosshead 151 in the mold closing step and the mold clamping step are collectively set as a series of setting conditions. The mold closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening step. For example, the speed or positions (including mold opening start position, speed switching position, and mold opening completion position) of the crosshead 151 in the mold opening step are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold closing start position are the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle $\theta$ (hereinafter, also referred to a "link angle $\theta$") between the first link 152 and the second link 153. The link angle $\theta$ is obtained from the position of the crosshead 151. When the link angle $\theta$ is 180°, the toggle magnification becomes the maximum value.

In a case where a space of the mold unit 10 is changed by a change of the mold unit 10, a temperature change of the mold unit 10, or the like, a mold space adjustment is performed such that a predetermined mold clamping force is obtained when the mold is clamped. For example, in the mold space adjustment, the gap L between the stationary platen 110 and the toggle support 130 is adjusted such that the link angle $\theta$ of the toggle mechanism 150 at the time of a mold touch where the movable mold 12 comes into contact with the stationary mold 11 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is held to be rotatable by the toggle support 130, and a mold space adjustment motor 183 which rotates the screw nut 182 screwed to the screw shaft 181.

The screw shaft 181 and the screw nut 182 are provided for each of the tie bars 140. Rotation of the mold space adjustment motor 183 may be transmitted to a plurality of screw nuts 182 a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each of the screw nuts 182, a drive gear is attached to an output shaft of the mold space adjustment motor 183, an intermediate gear which engages with a plurality of driven gears and drive gears is rotatably held by a center portion of the toggle support 130. In addition, the rotation transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182, thereby adjusting the position of the toggle support 130 that rotatably holds the screw nut 182 with respect to the stationary platen 110 and adjusting the gap L between the stationary platen 110 and the toggle support 130.

In the present embodiment, the screw nut 182 is rotatably held by the toggle support 130, and the tie bar 140 on which the screw shaft 181 is formed is fixed to the stationary platen 110. However, the present invention is not limited to this.

For example, the screw nut 182 may be rotatably held by the stationary platen 110 and the tie bar 140 may be fixed to the toggle support 130. In this case, the gap L can be adjusted by rotating the screw nut 182.

In addition, the screw nut 182 may be fixed to the toggle support 130, and the tie bar 140 may be rotatably held by the stationary platen 110. In this case, the gap L can be adjusted by rotating the tie bar 140.

Furthermore, the screw nut 182 may be fixed to the stationary platen 110, and the tie bar 140 may be rotatably held by the toggle support 130. In this case, the gap L can be adjusted by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the controller 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

The mold space adjustment mechanism 180 adjusts the gap L by rotating one of the screw shaft 181 and the screw nut 182 which are screwed together. A plurality of mold space adjustment mechanisms 180 may be used, and a plurality of mold space adjustment motors 183 may be used.

The mold space adjustment mechanism 180 of the present embodiment has the screw shaft 181 formed on the tie bar 140 and the screw nut 182 screwed to the screw shaft 181 in order to adjust the gap L, but the present invention is not limited to this.

For example, the mold space adjustment mechanism 180 may include a tie bar temperature controller that adjusts the temperature of the tie bar 140. The tie bar temperature controller is attached to each of the tie bars 140 and adjusts the temperature of the plurality of tie bars 140 in cooperation with each other. As the temperature of the tie bar 140 increases, the tie bar 140 becomes longer due to thermal expansion, and the gap L increases. The temperatures of the plurality of tie bars 140 can be adjusted independently.

The tie bar temperature controller includes a heater such as a heater, and adjusts the temperature of the tie bar 140 by heating. The tie bar temperature controller may include a cooler such as a water cooling jacket, and may adjust the temperature of the tie bar 140 by cooling. The tie bar temperature controller may include both the heater and the cooler.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are an up-down direction. The vertical type mold clamping unit includes a lower platen, an upper platen, a toggle support, a tie bar, a toggle mechanism, a mold clamping motor, and the like. One of the lower platen and the upper platen is used as a stationary platen, and the other is used as a movable platen. A lower mold is attached to the lower platen, and an upper mold is attached to the upper platen. The lower mold and the upper mold constitute a mold unit. The lower mold may be attached to the lower platen via a rotary table. The toggle support is disposed below the lower platen and connected to the upper platen via the tie bar. The upper platen and the toggle support are connected to each other with a gap therebetween in the mold opening and closing directions by the tie bar. The toggle mechanism is disposed between the toggle support and the lower platen and lifts and lowers the movable platen. The mold clamping motor operates the toggle mechanism. In the case where the mold clamping unit is a vertical type mold clamping unit, the number of tie bars is usually three. The number of tie bars is not particularly limited.

In addition, the mold clamping unit 100 of the present embodiment has the mold clamping motor 160 as a drive source. However, the mold clamping unit 100 may have an oil hydraulic cylinder instead of the mold clamping motor 160. In addition, the mold clamping unit 100 may have a linear motor for opening and closing a mold and may have an electromagnet for clamping a mold.

(Ejector Unit)

In descriptions of the ejector unit 200, as in the description of the mold clamping unit 100, a movement direction (for example, a right direction in Figs. 1 and 2) of the movable platen 120 when the mold is closed is defined as a front side, and a movement direction (a left direction in Figs. 1 and 2) of the movable platen 120 when the mold is opened is defined as a rear side.

The ejector unit 200 ejects the molding product from the mold unit 10. The ejector unit 200 includes an ejector motor 210, a motion conversion mechanism 220, an ejector rod 230, and the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 is movable forward or rearward in a through-hole of the movable platen 120. A front end portion of the ejector rod 230 is in contact with a movable member 15 which is disposed inside the movable mold 12 so as to be movable forward or rearward. The front end portion of the ejector rod 230 may be connected to or may not be connected to the movable member 15.

The ejector unit 200 performs an ejection step under the control of the controller 700.

In the ejection step, the ejector motor 210 is driven to move the ejector rod 230 forward from a standby position to an ejection position at a set speed, and thus, the movable member 15 moves forward and the molding product is ejected. Thereafter, the ejector motor 210 is driven to move the ejector rod 230 rearward at a set speed, and thus, the movable member 15 moves rearward to an original standby position. For example, a position or speed of the ejector rod 230 is detected using an ejector motor encoder 211. The ejector motor encoder 211 detects the rotation of the ejector motor 210 and sends a signal indicating the detection result to the controller 700. In addition, an ejector rod position detector which detects the position of the ejector rod 230 and an ejector rod speed detector which detects the speed of the ejector rod 230 are not limited to the ejector motor encoder 211, and a general detector can be used.

(Injection Unit)

In description of the injection unit 300, unlike the description of the mold clamping unit 100 or the description of the ejector unit 200, a movement direction (for example, a left direction in Figs. 1 and 2) of a screw 330 during filling is defined as a front side, and a movement direction (a right direction in Figs. 1 and 2) of the screw 330 during plasticizing is defined as a rear side.

The injection unit 300 is installed on a slide base 301 that is movable forward or rearward with respect to the frame Fr, and is movable forward or rearward with respect to the mold unit 10. The injection unit 300 comes into contact with the mold unit 10, and the cavity space 14 inside the mold unit 10 is filled with the molding material. For example, the injection unit 300 includes a cylinder 310, a nozzle 320, the screw 330, a plasticizing motor 340, an injection motor 350, a pressure detector 360, or the like.

The cylinder 310 heats the molding material supplied to the inside from a supply port 311. The molding material includes, for example, a resin. For example, the molding material is formed in a pellet shape, and is supplied to the supply port 311 in a solid state. The supply port 311 is formed at a rear portion of the cylinder 310. A cooler 312 such as a water cooling cylinder is provided on an outer periphery of the rear portion of the cylinder 310. A heater 313 such as a band heater and a temperature detector 314 are provided on the outer periphery of the cylinder 310 on a side forward of the cooler 312.

The cylinder 310 is divided into a plurality of zones in an axial direction of the cylinder 310 (a left-right direction in Figs. 1 and 2). The heater 313 and the temperature detector 314 are provided in each zone. For each zone, the controller 700 controls the heater 313 such that a detection temperature of the temperature detector 314 becomes a set temperature.

The nozzle 320 is provided at a front end portion of the cylinder 310 and is pressed against the mold unit 10. The heater 313 and the temperature detector 314 are provided on an outer periphery of the nozzle 320. The controller 700 controls the heater 313 such that a detection temperature of the nozzle 320 becomes a set temperature.

The screw 330 is disposed in the cylinder 310 so as to be rotatable and movable forward or rearward. If the screw 330 is rotated, the molding material is sent forward along a spiral groove of the screw 330. The molding material is gradually melted by heat from the cylinder 310 while being sent forward. As the liquid molding material is sent forward of the screw 330 and accumulated in a front portion of the cylinder 310, the screw 330 is moved rearward. Thereafter, if the screw 330 is moved forward, the liquid molding material accumulated in front of the screw 330 is injected from the nozzle 320 and filled in the mold unit 10.

A backflow prevention ring 331 is attached to a front portion of the screw 330 as a backflow prevention valve that prevents a backflow of the molding material flowing from the front side to the rear side of the screw 330 when the screw 330 is pushed forward.

When the screw 330 is moved forward, the backflow prevention ring 331 is pushed rearward by a pressure of the molding material in front of the screw 330 and is moved rearward with respect to the screw 330 to a closing position (see Fig. 2) at which a flow path of the molding material is blocked. Accordingly, the molding material accumulated in front of the screw 330 is prevented from flowing rearward.

On the other hand, when the screw 330 is rotated, the backflow prevention ring 331 is pushed forward by the pressure of the molding material sent forward along the spiral groove of the screw 330 and is thus moved forward with respect to the screw 330 to an opening position (see Fig. 1) at which the flow path of the molding material is opened. Accordingly, the molding material is fed ahead of the screw 330.

The backflow prevention ring 331 may be either a co-rotating type ring that rotates together with the screw 330 or a non-co-rotating type ring that does not rotate together with the screw 330.

The injection unit 300 may have a drive source that causes the backflow prevention ring 331 to move forward or rearward between the opening position and the closing position with respect to the screw 330.

The plasticizing motor 340 rotates the screw 330. A drive source that rotates the screw 330 is not limited to the plasticizing motor 340, and may be an oil hydraulic pump, for example.

The injection motor 350 moves the screw 330 forward or rearward. A motion conversion mechanism that converts a rotary motion of the injection motor 350 into a linear motion of the screw 330 or the like is provided between the injection motor 350 and the screw 330. For example, the motion conversion mechanism includes a screw shaft and a screw nut which is screwed to the screw shaft. A ball or a roller may be provided between the screw shaft and the screw nut. A drive source that moves the screw 330 forward or rearward is not limited to the injection motor 350, and may be an oil hydraulic cylinder, for example.

The pressure detector 360 detects a pressure transmitted between the injection motor 350 and the screw 330. The pressure detector 360 is provided in a force transmission path between the injection motor 350 and the screw 330 and detects the pressure acting on the pressure detector 360.

The pressure detector 360 sends a signal indicating the detection result to the controller 700. The detection result of the pressure detector 360 is used to control and monitor a pressure received by the screw 330 from the molding material, a back pressure against the screw 330, a pressure acting on the molding material from the screw 330, or the like.

The injection unit 300 performs a plasticizing step, a filling step, a pressure holding step, or the like under a control of the controller 700.

In the plasticizing step, the plasticizing motor 340 is driven to rotate the screw 330 at a set rotational speed and send the molding material forward along the spiral groove of the screw 330. Accordingly, the molding material is gradually melted. As the liquid molding material is sent forward of the screw 330 and accumulated in a front portion of the cylinder 310, the screw 330 is moved rearward. For example, the rotational speed of the screw 330 is detected using a plasticizing motor encoder 341. The plasticizing motor encoder 341 detects the rotation of the plasticizing motor 340 and sends a signal indicating the detection result to the controller 700. A screw rotational speed detector which detects the rotational speed of the screw 330 is not limited to the plasticizing motor encoder 341, and a general detector can be used.

In the plasticizing step, a set back pressure may be applied to the screw 330 by driving the injection motor 350 in order to limit a rapid retreat of the screw 330. For example, the back pressure against the screw 330 is detected using the pressure detector 360. The pressure detector 360 sends a signal indicating the detection result to the controller 700. When the screw 330 is moved rearward to a plasticizing completion position and a predetermined amount of molding material is accumulated in front of the screw 330, the plasticizing step is completed.

In the filling step, the injection motor 350 is driven to move the screw 330 forward at a set speed and fill the cavity space 14 in the mold unit 10 with the liquid molding material accumulated in front of the screw 330. For example, a position or speed of the screw 330 is detected using an injection motor encoder 351 or the like. The injection motor encoder 351 detects the rotation of the injection motor 350 and sends a signal indicating the detection result to the controller 700. If the position of the screw 330 reaches a set position, switching from the filling step to the pressure holding step (so-called V/P switching) is performed. A position where the V/P switching is performed is also referred to as a V/P switching position. The set speed of the screw 330 may be changed according to the position, time, or the like of the screw 330.

In addition, after the position of the screw 330 reaches the set position in the filling step, the screw 330 may be temporarily stopped at the set position, and then the V/P switching may be performed. Immediately before the V/P switching, the screw 330 may be moved forward or rearward at a slow speed instead of stopping the screw 330. In addition, a screw position detector which detects the position of the screw 330 and a screw speed detector which detects the speed of the screw 330 are not limited to the injection motor encoder 351, and a general encoder can be used.

In the pressure holding step, the injection motor 350 is driven to push the screw 330 forward, maintain the pressure of the molding material at the front end portion of the screw 330 (hereinafter, also referred to as "holding pressure") at a set pressure, and push the molding material remaining in the cylinder 310 toward the mold unit 10. Insufficient molding material due to cooling shrinkage in the mold unit 10 can be replenished. For example, the holding pressure is detected using the pressure detector 360. The pressure detector 360 sends a signal indicating the detection result to the controller 700. A set value of the holding pressure may be changed according to an elapsed time from the start of the pressure holding step or the like.

In the pressure holding step, the molding material in the cavity space 14 in the mold unit 10 is gradually cooled, and when the pressure holding step is completed, an inlet of the cavity space 14 is closed with the solidified molding material. This state is called a gate seal, and the backflow of the molding material from the cavity space 14 is prevented. After the pressure holding step, a cooling step is started. In the cooling step, the molding material in the cavity space 14 is solidified. In order to shorten a molding cycle time, the plasticizing step may be performed during the cooling step.

In addition, the injection unit 300 of the present embodiment is an inline screw type injection unit, but may be a preplasticating type injection unit. A preplasticating type injection unit supplies a molding material melted in a plasticizing cylinder to an injection cylinder, and injects the molding material from the injection cylinder into a mold unit. In the plasticizing cylinder, a screw is disposed rotatably or rotatably and movable forward or rearward, and in the injection cylinder, a plunger is disposed to be movable forward or rearward.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the up-down direction. A mold clamping unit combined with the vertical type injection unit 300 may be a vertical type mold clamping unit or a horizontal type mold clamping unit. Similarly, a mold clamping unit combined with the horizontal type injection unit 300 may be a horizontal type mold clamping unit or a vertical type mold clamping unit.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the up-down direction. A mold clamping unit combined with the vertical type injection unit 300 may be a vertical type mold clamping unit or a horizontal type mold clamping unit. Similarly, a mold clamping unit combined with the horizontal type injection unit 300 may be a horizontal type mold clamping unit or a vertical type mold clamping unit.

(Movement Unit)

In description of the movement unit 400, similarly to the description of the injection unit 300, a movement direction (for example, a left direction in Figs. 1 and 2) of the screw 330 during filling is defined as a front side, and a movement direction (a right direction in Figs. 1 and 2) of the screw 330 during plasticizing is defined as a rear side.

The movement unit 400 moves the injection unit 300 forward or rearward with respect to the mold unit 10. In addition, the movement unit 400 presses the nozzle 320 against the mold unit 10 to generate a nozzle touch pressure. The movement unit 400 includes a fluid hydraulic pump 410, a motor 420 as a drive source, a fluid hydraulic cylinder 430 as a fluid hydraulic actuator, and the like.

The fluid hydraulic pump 410 has a first port 411 and a second port 412. The fluid hydraulic pump 410 is a bi-directionally rotatable pump, and by switching a rotation direction of the motor 420, a working fluid (for example, oil) is suctioned from one of the first port 411 and the second port 412 and discharged from the other and a fluid hydraulic pressure is generated. The fluid hydraulic pump 410 can also suction the working fluid from a tank and discharge the working fluid from either the first port 411 or the second port 412.

The motor 420 operates the fluid hydraulic pump 410. The motor 420 drives the fluid hydraulic pump 410 with a rotational direction and rotational torque corresponding to a control signal from the controller 700. The motor 420 may be an electric motor or an electric servo motor.

The fluid hydraulic cylinder 430 includes a cylinder body 431, a piston 432, and a piston rod 433. The cylinder body 431 is fixed to the injection unit 300. The piston 432 divides an inside of the cylinder body 431 into a front chamber 435 as a first chamber and a rear chamber 436 as a second chamber. The piston rod 433 is fixed to the stationary platen 110.

The front chamber 435 of the fluid hydraulic cylinder 430 is connected to the first port 411 of the fluid hydraulic pump 410 via a first flow path 401. The working fluid discharged from the first port 411 is supplied to the front chamber 435 via the first flow path 401, whereby the injection unit 300 is pushed forward. The injection unit 300 is moved forward, and the nozzle 320 is pressed against the stationary mold 11. The front chamber 435 functions as a pressure chamber that generates the nozzle touch pressure of the nozzle 320 by the pressure of the working fluid supplied from the fluid hydraulic pump 410.

On the other hand, the rear chamber 436 of the fluid hydraulic cylinder 430 is connected to the second port 412 of the fluid hydraulic pump 410 via a second flow path 402. The working fluid discharged from the second port 412 is supplied to the rear chamber 436 of the fluid hydraulic cylinder 430 via the second flow path 402, whereby the injection unit 300 is pushed rearward. The injection unit 300 is moved rearward, and the nozzle 320 is separated from the stationary mold 11.

In the present embodiment, the movement unit 400 includes the fluid hydraulic cylinder 430, but the present invention is not limited to this. For example, instead of the fluid hydraulic cylinder 430, an electric motor and a motion conversion mechanism that converts a rotary motion of the electric motor into a linear motion of the injection unit 300 may be used.

(Controller)

For example, the controller 700 is constituted by a computer, and as shown in Figs. 1 and 2, includes a Central Processing Unit (CPU) 701, a recording medium 702 such as a memory, an input interface 703, and an output interface 704. The controller 700 performs various controls by causing the CPU 701 to execute a program stored in the recording medium 702. In addition, the controller 700 receives a signal from the outside through the input interface 703 and transmits a signal to the outside through the output interface 704.

The controller 700 repeatedly manufactures molding products by repeatedly performing a mold closing step, a mold clamping step, a mold opening step, and the like. Furthermore, the controller 700 performs a plasticizing step, a filling step, a pressure holding step, and the like during the mold clamping step. A series of operations for obtaining molding products, for example, operations from the start of the plasticizing step to the start of the next plasticizing step are also referred to as "shot" or "molding cycle". The time required for one shot is also referred to as "molding cycle time".

For example, one molding cycle includes the plasticizing step, the mold closing step, the mold clamping step, the filling step, the pressure holding step, the cooling step, the mold opening step, and the ejection step in this order. The order here is the order of the start of each step. The filling step, the pressure holding step, and the cooling step are performed in between the start of the mold clamping step and the end of the mold clamping step. The end of the mold clamping step coincides with the start of the mold opening step. In order to shorten the molding cycle time, a plurality of steps may be performed simultaneously. For example, the plasticizing step may be performed during the cooling step of the previous molding cycle, and in this case, the mold closing step may be performed at the beginning of the molding cycle. The filling step may be started during the mold closing step. The ejection step may be started during the mold opening step. In a case where an on-off valve that opens and closes the flow path of the nozzle 320 is provided, the mold opening step may be started during the plasticizing step. This is because even if the mold opening step is started during the plasticizing step, the molding material does not leak from the nozzle 320 if the on-off valve closes the flow path of the nozzle 320.

The controller 700 is connected to a manipulation unit 750 and a display unit 760. The manipulation unit 750 receives an input manipulation by a user and outputs a signal corresponding to the input manipulation to the controller 700. The display unit 760 displays a manipulation screen corresponding to the input manipulation in the manipulation unit 750 under the control of the controller 700.

The manipulation screen is used for setting the injection molding machine or the like. A plurality of manipulation screens are prepared and are switched or overlapped to be displayed. The user performs setting of the injection molding machine (including inputting of set values) by manipulating the manipulation unit 750 while viewing the manipulation screen displayed on the display unit 760.

For example, the manipulation unit 750 and the display unit 760 may be configured as a touch panel, and may be integrated. In addition, although the manipulation unit 750 and the display unit 760 of the present embodiment are integrated, the manipulation unit 750 and the display unit 760 may provide independently. A plurality of manipulation units 750 may be provided.

(Evaluation of symmetry of toggle mechanism)

The controller 700 has a function as a tie bar balance measurer which measures the balance of the plurality of tie bars 140 by measuring strains of the plurality of tie bars 140 caused by the mold clamping. The strain of the tie bar 140 is detected by the tie bar strain detector 141. The tie bar strain detector 141 is attached to each of the tie bars 140 and detects the strain of each of the tie bars 140.

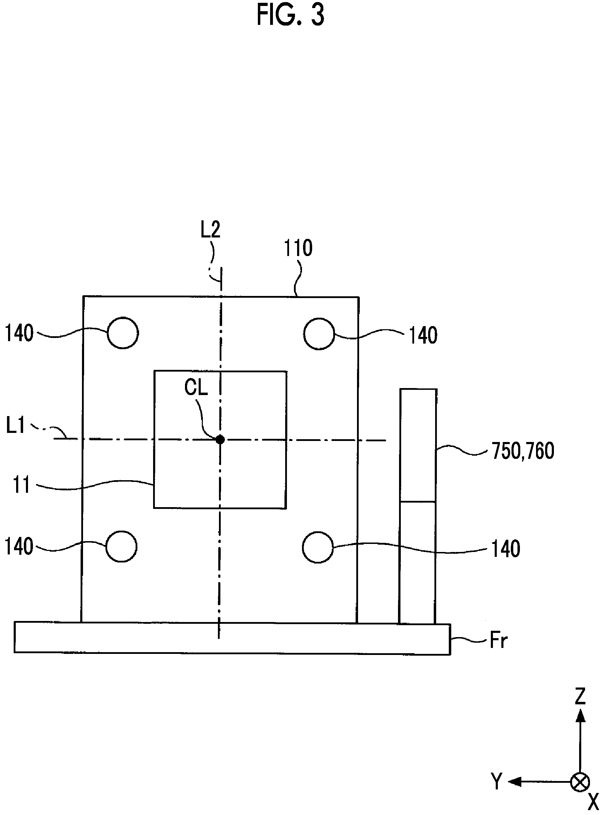

Fig. 3 is a view showing a positional relationship between the plurality of tie bars provided in the injection molding machine according to the embodiment, and is a view of the stationary platen as viewed from the movable platen side. For example, the mold clamping unit 100 has four tie bars 140. In Fig. 3, the X direction, the Y direction, and the Z direction are directions perpendicular to each other. The mold opening and closing directions are the X direction. In a case where the mold clamping unit 100 is a horizontal type mold clamping unit, the X direction and the Y direction are the horizontal direction and the Z direction is the vertical direction. The toggle mechanism 150 is a double toggle mechanism including a pair of link groups with a gap therebetween in the Z direction.

The four tie bars 140 are arranged vertically symmetrically about a horizontal line L1 and arranged horizontally symmetrically about a vertical line L2 as viewed in the mold opening and closing directions. The horizontal line L1 and the vertical line L2 pass through a center line CL of the toggle mechanism 150 as viewed in the mold opening and closing directions.

Each of the four tie bars 140 is extended by the mold clamping. By measuring the strains (for example, elongation) of the plurality of tie bars 140, the balance of the plurality of tie bars 140 can be measured. The balance of the plurality of tie bars 140 is also referred to as "tie bar balance".

The tie bar balance is expressed by variation in the strain of the plurality of tie bars 140. For example, the variation in strain is expressed by a difference in strain. Since the strain increases as the mold clamping force increases, in order to eliminate an influence of a magnitude of the mold clamping force on a magnitude of the strain, the difference in strain may be expressed by a ratio to an average value of the strain. The ratio may be expressed as a percentage (%).

For example, the tie bar balance is set such that the surface pressure between the stationary mold 11 and the movable mold 12 becomes a target distribution during the mold clamping. The target distribution may be either a uniform distribution or a non-uniform distribution, and is set according to situations . Molding defects can be reduced.

The target distribution may be a uniform distribution by default, and the effective length TL of each of the tie bars 140 may be adjusted such that the variation in strain becomes zero when the mold clamping force is a target mold clamping force used in manufacturing a molding product. Here, the effective length TL of each of the tie bars 140 is a length between a portion fastened to the toggle support 130 and a portion fastened to the stationary platen 110 in the corresponding tie bar 140 and is measured along each of the tie bars 140. The effective length TL of each of the tie bars 140 is measured in a state where the mold is opened.

In a case where the mold clamping unit is a vertical type mold clamping unit, the effective length TL of each of the tie bars 140 is a length between a portion fastened to the toggle support and a portion fastened to the upper platen in the corresponding tie bar 140 and is measured along each of the tie bars 140.

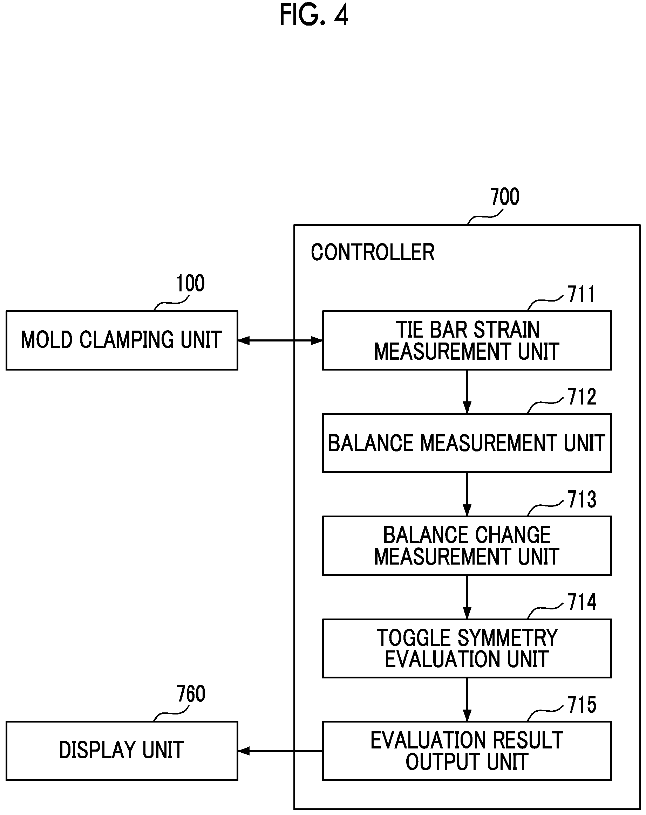

Fig. 4 is a functional block diagram showing components of the controller according to the embodiment. Each functional block shown in Fig. 4 is conceptual and does not necessarily need to be physically configured as illustrated. All or a part of each functional block can be configured to be functionally or physically distributed and integrated in arbitrary units. Each processing function performed in each functional block may be realized entirely or partially by a program executed by the CPU, or may be realized as hardware by wired logic.

For example, the controller 700 includes a tie bar strain measurement unit 711 which measures the strains of the plurality of tie bars 140 caused by the mold clamping, and a balance measurement unit 712 which measures the balance of the plurality of tie bars 140 based on a measurement result of the tie bar strain measurement unit 711. In addition, the controller 700 includes a balance change measurement unit 713 which measures a change in tie bar balance when the mold clamping force is changed by the balance measurement unit 712, and a toggle symmetry evaluation unit 714 which evaluates a symmetry of the toggle mechanism 150 based on a measurement result of the balance change measurement unit 713. Furthermore, the controller 700 may include an evaluation result output unit 715 which outputs an evaluation result of the toggle symmetry evaluation unit 714.

The tie bar balance measurer may be provided separately from the controller 700. In this case, the tie bar balance measurer may be connected to the controller 700 via a network such as a Local Area Network (LAN) or an Internet line so as to operate the mold clamping unit 100. The connection may be either a wired connection or a wireless connection.

For example, the balance change measurement unit 713 measures a change in the tie bar balance when the mold clamping force is changed by mold space adjustment. The mold clamping force is changed not by changing the mold clamping position of the crosshead 151 but by adjusting the mold space. Therefore, the mold clamping position of the crosshead 151 does not change before and after the mold clamping force is changed, and the link angle θ during the mold clamping does not substantially change. Therefore, while maintaining the link angle θ during the mold clamping, that is, while maintaining the posture of the toggle mechanism 150 during the mold clamping, a change in the tie bar balance when the mold clamping force is changed can be observed. A change in the effective length TL of each of the plurality of tie bars 140 before and after the mold clamping force is changed is the same such that the link angle θ during the mold clamping does not substantially change before and after the mold clamping force is changed. That is, before and after the mold clamping force is changed, the effective lengths TL of the plurality of tie bars 140 are increased or decreased by the same amount.

The toggle mechanism 150 includes the pair of link groups each including the first link 152 and the second link 153, and the pair of link groups are arranged with a gap therebetween in the up-down direction. Therefore, as the tie bar balance used for the evaluation of the symmetry of the toggle mechanism 150, for example, a ratio (RD) of a difference between an average value (D1) of the strains of the upper two tie bars 140 and an average value (D2) of the strains of the lower two tie bars 140 to an average value of the strains of the four tie bars 140 is used. In a case where the ratio (RD) is expressed as a percentage, the ratio is obtained by the following formula.

[Formula 1]

$$RD = \frac{D1 - D2}{\left(\dfrac{D1 + D2}{2}\right)} \times 100 \qquad \cdots (1)$$

The ratio (RD) being positive means that the average value (D1) of the strains of the upper two tie bars 140 is greater than the average value (D2) of the strains of the lower two tie bars 140. On the other hand, the ratio (RD) being negative means that the average value (D2) of the strains of the lower two tie bars 140 is greater than the average value (D1) of the strains of the upper two tie bars 140. Since the symmetry of the toggle mechanism 150 is evaluated using the strain of all the four tie bars 140, the accuracy of the evaluation can be improved.

Instead of the average value (D1) of the strains of the upper two tie bars 140, a sum of the strains of the upper two tie bars 140 may be used, and instead of the average value (D2) of the strains of the lower two tie bars 140, a sum of the strains of the lower two tie bars 140 may be used.

Furthermore, as the tie bar balance used for the evaluation of the symmetry of the toggle mechanism 150, a ratio of a difference between the strain of the upper one tie bar 140 and the strain of the lower one tie bar 140 to an average value of the strains of these two tie bars 140 may be used. The number of tie bar strain detectors 141 can be reduced.

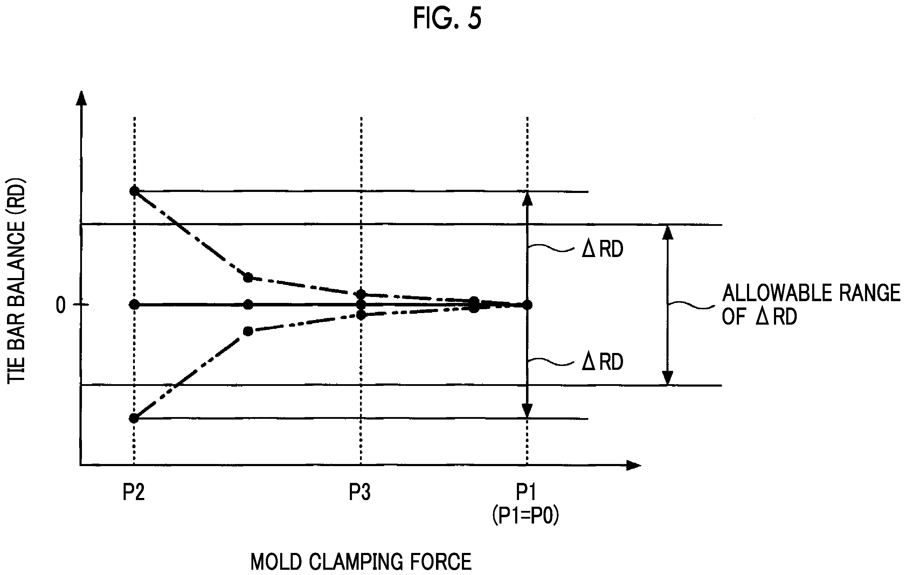

Fig. 5 is a diagram showing three measurement results of the balance change measurement unit according to the embodiment. In Fig. 5, the effective lengths TL of the four tie bars 140 are adjusted such that the ratio (RD) becomes substantially zero when the mold clamping force is a target mold clamping force P0 during injection molding. In this state, if the mold clamping force is caused to be smaller than the target mold clamping force P0, there are a case where the ratio (RD) hardly changes as shown by solid line in Fig. 5, a case where the ratio (RD) increases as shown by one-dot chain line in Fig. 5, and a case where the ratio (RD) decreases as shown by two-dot chain line in Fig. 5.

As shown by solid line in Fig. 5, in the case where the ratio (RD) hardly changes due to the change in the mold clamping force, it is estimated that the symmetry of the toggle mechanism 150 is good during the mold clamping. Since the symmetry of the toggle mechanism 150 is good during the mold clamping, for example, if the ratio (RD) is substantially zero when the mold clamping force is the target mold clamping force P0, the ratio (RD) is kept substantially zero even when the mold clamping force is other than the target mold clamping force P0.

On the other hand, in the case where the ratio (RD) changes due to the change in the mold clamping force as shown by one-dot chain line or two-dot chain line in Fig. 5, it is estimated that the symmetry of the toggle mechanism 150 is poor during the mold clamping. Since the symmetry of the toggle mechanism 150 is broken during the mold clamping, for example, even if the ratio (RD) is substantially zero when the mold clamping force is the target mold clamping force P0, the ratio (RD) is not substantially zero when the mold clamping force is other than the target mold clamping force P0.

The toggle symmetry evaluation unit 714 evaluates the symmetry of the toggle mechanism 150 based on the measurement result of the balance change measurement unit 713 as shown in Fig. 5. For example, the toggle symmetry evaluation unit 714 measures a change ($\Delta$RD) in the ratio (RD) when the mold clamping force is changed from a reference value P1 to a value P2 different from the reference value, and evaluates the symmetry of the toggle mechanism 150 based on the measurement result. In a case where the change ($\Delta$RD) falls within an allowable range, the symmetry of the toggle mechanism 150 is evaluated as good. On the other hand, in a case where the change ($\Delta$RD) is outside the allowable range, the symmetry of the toggle mechanism 150 is evaluated as poor. The allowable range is defined by a preset threshold. The threshold that defines the allowable range may be either an upper limit value or a lower limit value, or both.

The toggle symmetry evaluation unit 714 of the present embodiment evaluates the symmetry of the toggle mechanism 150 in two stages, "good" and "bad", but may also evaluate the symmetry of the toggle mechanism 150 in three or more stages. In Fig. 5, the target mold clamping force P0 is used as the reference value P1, but a value different from the target mold clamping force P0 may also be used. Furthermore, the value P2 different from the reference value P1 may be larger or smaller than the reference value P1. In addition, for the evaluation of the symmetry of the toggle mechanism 150, a value between P1 and P2 (for example, P3) may be used, or a profile of the change may be used.

In the present embodiment, before evaluating the symmetry of the toggle mechanism 150, the effective lengths TL of the four tie bars 140 are adjusted such that the ratio (RD) is substantially zero when the mold clamping force is the target mold clamping force P0, but the present invention is not limited to this. This is because the change (relative value) in the tie bar balance when the mold clamping force is changed is used for the evaluation of the symmetry of the toggle mechanism 150, and the tie bar balance (absolute value) itself is not used. Therefore, after the evaluation of the symmetry of the toggle mechanism 150, the effective lengths TL of the four tie bars 140 may be adjusted such that the ratio (RD) when the mold clamping force is the target mold clamping force P0 is substantially zero. If the effective lengths TL of the four tie bars 140 are adjusted, profiles indicated by solid line, one-dot chain line, and two-dot chain line in Fig. 5 tend to undergo parallel displacement in the up-down direction in the figure.

The toggle symmetry evaluation unit 714 may determine a magnitude relationship between one link angle $\theta$1 and the other link angle $\theta$2 during the mold clamping based on the measurement result of the balance change measurement unit 713 as shown in Fig. 5. If which of the two link angles $\theta$1 and $\theta$2 is larger during the mold clamping is known, a cause of breaking of the symmetry of the toggle mechanism 150 can be narrowed down.

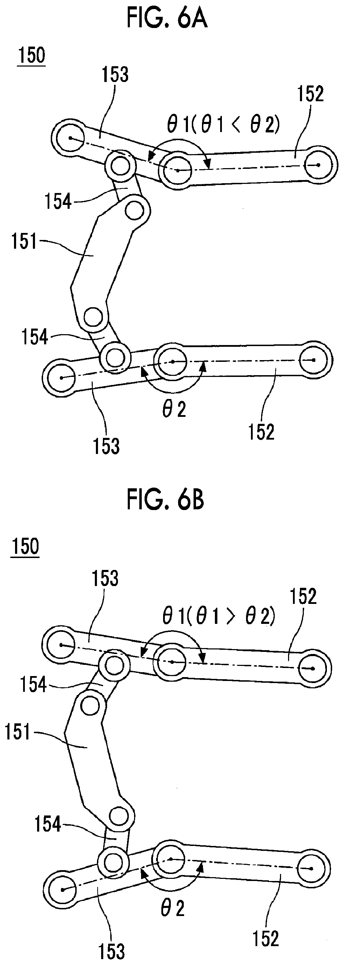

Figs. 6A and 6B are views showing the magnitude relationship between the two link angles during the mold clamping. Fig. 6A shows a state when the upper link angle $\theta$1 is smaller than the lower link angle $\theta$2, and Fig. 6B shows a state when the lower link angle $\theta$2 is smaller than the upper link angle $\theta$1.

In the case where the ratio (RD) increases as the mold clamping force is reduced as shown by one-dot chain line in Fig. 5, the upper link angle $\theta$1 during the mold clamping tends to be smaller than the lower link angle $\theta$2 as shown in Fig. 6A. That is, in this case, during the mold clamping, the upper link group tends to bend more than the lower link group, and the crosshead 151 tends to tilt forward.

On the other hand, in the case where the ratio (RD) decreases when the mold clamping force is reduced as shown by two-dot chain line in Fig. 5, the lower link angle $\theta$2 during the mold clamping tends to be smaller than the upper link angle $\theta$1 as shown in Fig. 6B. That is, in this case, during the mold clamping, the lower link group tends to bend more than the upper link group, and the crosshead 151 tends to tilt rearward.

The toggle symmetry evaluation unit 714 can determine the magnitude relationship between the one link angle $\theta$1 and the other link angle $\theta$2 during the mold clamping by determining whether the ratio (RD) increases or decreases when the mold clamping force is changed to be small. Alternatively, the toggle symmetry evaluation unit 714 may determine the magnitude relationship between the one link angle $\theta$1 and the other link angle $\theta$2 during the mold clamping by determining whether the ratio (RD) increases or decreases when the mold clamping force is changed to be large.

The evaluation result output unit 715 may output the evaluation result of the toggle symmetry evaluation unit 714. That is, the evaluation result output unit 715 may notify the evaluation result of the toggle symmetry evaluation unit 714. The output (notification) is performed in the form of an image or sound, and as the output unit, the display unit 760, a warning light, a buzzer, or the like is used. User convenience can be improved.

For example, the evaluation result output unit 715 may output an alarm in a case where the symmetry of the toggle mechanism 150 is evaluated as poor. The alarm output can alert the user. A plurality of types of alarms may be prepared according to the evaluation. For example, an alarm that the tie bar balance needs to be adjusted each time the target mold clamping force P0 at the time of injection molding is changed, and an alarm that the operation of the injection molding machine is interrupted may be prepared. In the former case, the injection molding machine is repaired at an appropriate time, and in the latter case, the injection molding machine is repaired as soon as possible.

In repairing the injection molding machine, for example, replacement of sliding parts of the toggle mechanism 150, adjustment of clearance, replacement of the guide for guiding the crosshead 151 in a front-rear direction, position adjustment, and the like are performed.

After repairing the injection molding machine, the controller 700 may evaluate the symmetry of the toggle mechanism 150 by measuring again the change in the tie bar balance when the mold clamping force is changed. Accordingly, the accuracy of repair of an injection molding machine can be evaluated. The evaluation of the symmetry of the toggle mechanism 150 and the repair of the injection molding machine may be repeatedly performed until the symmetry of the toggle mechanism 150 is evaluated as good.

(Modifications and Improvements)

Hereinbefore, embodiments and the like of the injection molding machine and the injection molding method are described. The present invention is not limited to the above embodiments or the like, and various modifications and improvements may be made within the scope of the present invention described in Claims.

Although the controller of the above embodiment evaluates the vertical symmetry of the double toggle mechanism which includes the pair of upper and lower link groups, the controller may evaluate horizontal symmetry. As the tie bar balance used for the evaluation of the horizontal symmetry, for example, a ratio of a difference between an average value of the strains of the two tie bars 140 on one side in the Y direction (left side in Fig. 3) and an average value of the strains of the two tie bars 140 on the opposite side in the Y direction (right side in Fig. 3) to an average value of the strains of the four tie bars 140 may be used. Instead of the average value of the strains of the left two tie bars 140, a sum of the strains of the left two tie bars 140 may be used, and instead of the average value of the strains of the right two tie bars 140, a sum of the strains of the right two tie bars 140 may be used. As the tie bar balance used for the evaluation of the horizontal symmetry, a ratio of a difference between the strain of one tie bar 140 on one side in the Y direction and the strain of one tie bar 140 on the opposite side in the Y direction to an average value of the strains of these two tie bars 140 may be used. The number of tie bar strain detectors 141 can be reduced.

Reference Signs List

100   mold clamping unit
140   tie bars
141   tie bar strain detector
150   toggle mechanism (double toggle mechanism)
151   crosshead
152   first link
153   second link
154   third link
160   mold clamping motor
180   mold space adjustment mechanism
700   controller (tie bar balance measurer)
711   tie bar strain measurement unit
712   balance measurement unit
713   balance change measurement unit
714   toggle symmetry evaluation unit
715   evaluation result output unit

## Claims

1. An injection molding machine comprising:

   a double toggle mechanism (150) including a pair of link groups including a first Link (152) and a second link (153) which are bendably/stretchably connected, to each other;
   a plurality of tie bars (140) which extend in mold opening and closing directions according to a mold clamping force generated by operating the double toggle mechanism (150); and
   a tie bar balance measurer (700) which is configured to measure a balance of the plurality of tie bars (140), wherein the tie bar balance measurer (700) includes

   a tie bar strain measurement unit (711) which is configured to measure strains of the plurality of tie bars (140) generated by mold clamping,
   a balance measurement unit (712) which is configured to measure the balance of the plurality of tie bars (140) based on a measurement result of the tie bar strain measurement unit (711),
   a balance change measurement unit (713) which is configured to measure a change in the balance measured by the balance measurement unit: (712) when the mold clamping force is changed, and
   a toggle symmetry evaluation unit (714) which is configured to evaluate a symmetry of the double toggle mechanism (150) based on a measurement result of the balance change measurement unit (713) .

2. The injection molding machine according to claim 1, further comprising:

   a mold space adjustment mechanism (180) which is configured to perform mold space adjustment,
   wherein the balance change measurement unit (713) is configured to measure the change in the balance when the mold clamping force is changed by the mold space adjustment.

3. The injection molding machine according to claim 1 or 2,
   wherein the toggle symmetry evaluation unit (714) is configured to determine a magnitude relationship between an angle between the first link (152) and the second link (153) in one of the link groups and an angle between the first link (152) and the second link (153) in the other link group based on the measurement result of the balance change measurement unit (713).

4. The injection molding machine according to any one of claims 1 to 3,
   wherein the mold opening and closing directions are a horizontal direction,
   the pair of the link groups are arranged with a gap therebetween in an up-down direction, and
   the four tie bars (140) are provided vertically symmetrically or horizontally symmetrically as viewed in the mold opening and closing directions.

5. An injection molding method for manufacturing a molding product by performing mold closing, mold clamping, and mold opening of a mold unit by a mold clamping unit including a double toggle mechanism (150) including a pair of link groups including a first link (152) and a second link (153) which are bendably/stretchably connected to each other and a plurality of tie bars (140) which extend in mold opening and closing directions according to a mold clamping force generated by operating the double toggle mechanism (150), and filling an inside of the mold unit in a state of the mold clamping with a molding material, the method comprising:

   measuring a balance of the plurality of tie bars (140) by measuring strains of the plurality of tie bars (140) caused by the mold clamping;
   evaluating a symmetry of the double toggle mechanism (150) by measuring a change in the balance when the mold clamping force is changed; and
   outputting an evaluation result of the symmetry of the double toggle mechanism (150) .

## Patentansprüche

1. Spritzgießmaschine, umfassend:

   einen Doppelkniehebelmechanismus (150) mit einem Paar Bindegliedgruppen, welche ein erstes Bindeglied (152) und ein zweites Bindeglied (153) umfassen, die beugbar/streckbar miteinander verbunden sind;

mehrere Säulen (140), die sich in Formöffnungs- und - schließrichtungen gemäß einer Formschließ-/klemmkraft, die durch Betätigen des Doppelkniehebelmechanismus (150) erzeugt wird, strecken; und
eine Säuleausgleichs-Messeinrichtung (700), die konfiguriert ist, einen Ausgleich der mehreren Säulen (140) zu messen;
wobei die Säuleausgleichs-Messeinrichtung (700) eine Säuledehnungs-Messeinheit (711), die konfiguriert ist, Dehnungen der mehreren Säulen (140), die durch Formklemmen erzeugt werden, zu messen;

eine Ausgleichs-Messeinheit (712), die konfiguriert ist, den Ausgleich der mehreren Säulen (140) basierend auf einem Messergebnis der Säuledehnungs-Messeinheit (711) zu messen,
eine Ausgleichsveränderungs-Messeinheit (713), die konfiguriert ist, eine Veränderung in dem Ausgleich, der durch die Ausgleichs-Messeinheit (712) gemessen wird, zu messen, wenn die Formschließ-/klemmkraft verändert wird, sowie
eine Kniehebelsymmetriebewertungseinheit (714), die konfiguriert ist, eine Symmetrie des Doppelkniehebelmechanismus (150) basierend auf einem Messergebnis der Ausgleichsveränderungs-Messeinheit (713) zu bewerten, umfasst.

2. Spritzgießmaschine nach Anspruch 1, ferner umfassend:

einen Formraumanpassungsmechanismus (180), der konfiguriert ist, eine Formraumanpassung durchzuführen, wobei die Ausgleichsveränderungs-Messeinheit (713) konfiguriert ist, die Veränderung in dem Ausgleich zu messen, wenn die Formschließ-/klemmkraft durch die Formraumanpassung verändert wird.

3. Spritzgießmaschine nach Anspruch 1 oder 2,
wobei die Kniehebelsymmetriebewertungseinheit (714) konfiguriert ist, ein Größenverhältnis zwischen einem Winkel zwischen dem ersten Bindeglied (152) und dem zweiten Bindeglied (153) in einer der Bindegliedgruppen und einem Winkel zwischen dem ersten Bindeglied (152) und dem zweiten Bindeglied (153) in der anderen Bindegliedgruppe basierend auf dem Messergebnis der Ausgleichsveränderungs-Messeinheit (713) zu bestimmen.

4. Spritzgießmaschine nach einem der Ansprüche 1 bis 3,
wobei die Formöffnungs- und -schließrichtungen eine horizontale Richtung sind,
das Paar der Bindegliedgruppen mit einem Abstand dazwischen in einer Oben-Unten-Richtung angeordnet ist, und
die vier Säulen (140) in den Formöffnungs- und - schließrichtungen betrachtet vertikalsymmetrisch oder horizontalsymmetrisch vorgesehen sind.

5. Spritzgießverfahren zum Herstellen eines Formerzeugnisses mittels Durchführen von Formschließen, Formklemmen und Formöffnen einer Formeinheit durch eine Formschließ-/klemmeinheit, umfassend einen Doppelkniehebelmechanismus (150) mit einem Paar Bindegliedgruppen, welche ein erstes Bindeglied (152) und ein zweites Bindeglied (153) umfassen, die beugbar/streckbar miteinander verbunden sind, und mehrere Säulen (140), die sich in Formöffnungs- und -schließrichtungen gemäß einer Formschließ-/klemmkraft, die durch Betätigen des Doppelkniehebelmechanismus (150) erzeugt wird, strecken, und Füllen eines Inneren der Formeinheit in einem Zustand des Formklemmens mit einem Formmaterial, wobei das Verfahren umfasst:

Messen eines Ausgleichs der mehreren Säulen (140) durch Messen von Dehnungen der mehreren Säulen (140), die durch das Formklemmen verursacht werden;
Bewerten einer Symmetrie des Doppelkniehebelmechanismus (150) durch Messen einer Veränderung in dem Ausgleich, wenn die Formschließ-/klemmkraft verändert wird; und
Ausgeben eines Bewertungsergebnisses der Symmetrie des Doppelkniehebelmechanismus (150).

**Revendications**

1. Une machine de moulage par injection comprenant :

un mécanisme de bascule double (150) comprenant une paire de groupes de liaisons comprenant une première liaison (152) et une seconde liaison (153) qui sont reliées de manière flexible/étirable l'une à l'autre ;
une pluralité de barres d'ancrage (140) qui s'étendent dans des directions d'ouverture et de fermeture de moule selon une force de serrage de moule générée en actionnant le mécanisme de bascule double (150) ; et
un mesureur d'équilibre de barre d'ancrage (700) qui est configuré pour mesurer un équilibre de la pluralité de barres d'ancrage (140),
dans laquelle le mesureur d'équilibre de barre d'ancrage (700) comprend
une unité de mesure de déformation de barre d'ancrage (711) qui est configurée pour mesurer les déformations de la pluralité de barres d'ancrage (140) générées par le serrage du moule,
une unité de mesure d'équilibre (712) qui est configurée pour mesurer l'équilibre de la pluralité de barres d'ancrage (140) sur la base d'un résultat de mesure de l'unité de mesure de déformation de barre d'ancrage (711),
une unité de mesure de changement d'équilibre (713) qui est configurée pour mesurer un changement d'équilibre mesuré par l'unité de mesure d'équilibre (712) lorsque la force de serrage de moule est modifiée, et
une unité d'évaluation de symétrie de bascule (714) qui est configurée pour évaluer une symétrie du mécanisme de bascule double (150) sur la base d'un résultat de mesure de l'unité de mesure de changement d'équilibre (713).

2. La machine de moulage par injection selon la revendication 1, comprenant en outre :

un mécanisme de réglage d'espace de moule (180) qui est configuré pour effectuer un réglage d'espace de moule,
dans laquelle l'unité de mesure de changement d'équilibre (713) est configurée pour mesurer le changement d'équilibre lorsque la force de serrage de moule est modifiée par le réglage d'espace de moule.

3. La machine de moulage par injection selon la revendication 1 ou 2, dans laquelle l'unité d'évaluation de symétrie de bascule (714) est configurée pour déterminer une relation de magnitude entre un angle entre la première liaison (152) et la seconde liaison (153) dans l'un des groupes de liaisons et un angle entre la première liaison (152) et la seconde liaison (153) dans l'autre groupe de liaisons sur la base du résultat de mesure de l'unité de mesure de changement d'équilibre (713).

4. La machine de moulage par injection selon l'une quelconque des revendications 1 à 3,
dans laquelle les directions d'ouverture et de fermeture de moule sont une direction horizontale,
les deux groupes de liaisons possèdent un espace entre eux dans une direction haut/bas, et
les quatre barres d'ancrage (140) sont prévues de manière verticalement symétrique ou horizontalement symétrique lorsque l'on regarde dans les directions d'ouverture et de fermeture de moule.

5. Une méthode de moulage par injection destinée à fabriquer un produit de moulage en effectuant une fermeture de moule, un serrage de moule et une ouverture de moule d'une unité de moule par une unité de serrage de moule comprenant un mécanisme de bascule double (150) comprenant une paire de groupes de liaisons comprenant une première liaison (152) et une seconde liaison (153) qui sont reliées l'une à l'autre de manière flexible/étirable et une pluralité de barres d'ancrage (140) qui s'étendent dans des directions d'ouverture et de fermeture de moule selon une force de serrage de moule générée en actionnant le mécanisme de bascule double (150), et en remplissant un intérieur de l'unité de moule dans un état de serrage du moule avec un matériau de moulage, le procédé comprenant :

la mesure d'un équilibre de la pluralité de barres d'ancrage (140) en mesurant les déformations de la pluralité de barres d'ancrage (140) provoquées par le serrage de moule ;
l'évaluation d'une symétrie du mécanisme de bascule double (150) en mesurant un changement d'équilibre lorsque la force de serrage de moule es modifiée ; et
la délivrance d'un résultat d'évaluation de la symétrie du mécanisme de bascule double (150).

FIG. 1

EP 3 590 682 B1

FIG. 2

# FIG. 3

# FIG. 4

700

CONTROLLER

100

| MOLD CLAMPING UNIT | ⟷ | TIE BAR STRAIN MEASUREMENT UNIT | 711 |

↓

BALANCE MEASUREMENT UNIT — 712

↓

BALANCE CHANGE MEASUREMENT UNIT — 713

↓

TOGGLE SYMMETRY EVALUATION UNIT — 714

↓

760

DISPLAY UNIT ← EVALUATION RESULT OUTPUT UNIT — 715

# FIG. 5

TIE BAR BALANCE (RD)

MOLD CLAMPING FORCE

P2   P3   P1
(P1=P0)

$\Delta$ RD

ALLOWABLE RANGE
OF $\Delta$ RD

$\Delta$ RD

0

EP 3 590 682 B1

## FIG. 6A

## FIG. 6B

**EP 3 590 682 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016185690 A